(19) Europäisches Patentamt
European Patent Office
Office européen des brevets

(11) EP 4 763 924 A1

(12) **EUROPEAN PATENT APPLICATION**
published in accordance with Art. 153(4) EPC

(43) Date of publication:
**24.06.2026 Bulletin 2026/26**

(21) Application number: **24911892.8**

(22) Date of filing: **27.09.2024**

(51) International Patent Classification (IPC):
***C08L 101/00*** *(2006.01)* ***C08K 3/01*** *(2018.01)*
***C08K 3/04*** *(2006.01)*

(52) Cooperative Patent Classification (CPC):
**C08K 3/01; C08K 3/04; C08L 101/00**

(86) International application number:
**PCT/JP2024/034760**

(87) International publication number:
**WO 2025/141998 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.12.2023 JP 2023219455**

(71) Applicant: **Fuji Polymer Industries Co., Ltd.**
**Nagoya-shi, Aichi 450-0002 (JP)**

(72) Inventors:
- **GOTO, Mai**
  **Aichi 463-0026 (JP)**
- **KAMIYA, Yuki**
  **Aichi 463-0026 (JP)**

(74) Representative: **Dehns**
**10 Old Bailey**
**London EC4M 7NG (GB)**

# (54) HEAT-RESISTANT RESIN COMPOSITION, HEAT-RESISTANT RESIN SHEET USING SAME, AND METHOD FOR PRODUCING SAME

(57) The present invention provides a heat-resistant resin composition that does not inhibit curing of thermosetting resins and does not adversely affect semiconductors and the like, a heat-resistant resin sheet formed using the heat-resistant resin composition, and a method for producing the heat-resistant resin sheet. The heat-resistant resin composition contains: a matrix resin made of a thermosetting resin; and a heat-resistant additive, wherein the heat-resistant additive is cellulose charcoal powder.

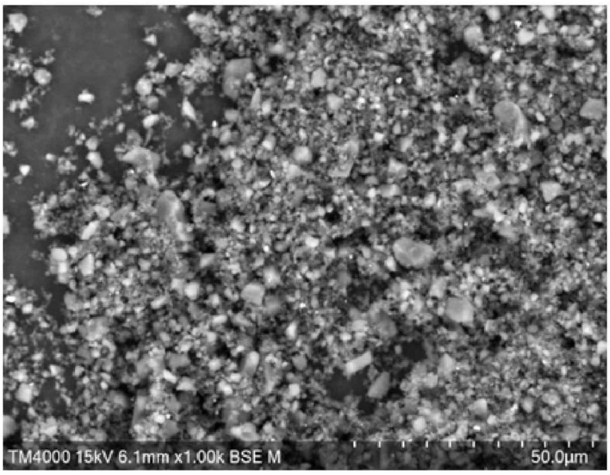


FIG. 3

EP 4 763 924 A1

## Description

### Technical Field

The present invention relates to a heat-resistant resin composition suitable as a material to be interposed between a heat generating member and a heat dissipator in electrical and electronic components and the like, a heat-resistant resin sheet formed using the heat-resistant resin composition, and a method for producing the heat-resistant resin sheet.

### Background Art

Recent dramatic improvement in performance of semiconductor devices such as CPUs has led to a considerable increase in the amount of heat generated by them. On this account, electronic components that generate heat are equipped with a heat dissipator, and a thermally conductive sheet is used to improve the adhesion between a semiconductor device and a heat dissipating portion. As devices become smaller, more sophisticated, and more highly integrated, there is an increasing demand for thermally conductive sheets with heat resistance. On the other hand, it is also required to add pigments to thermally conductive sheets to achieve differentiation from competitors' products or differentiation among products. WO 2019/021826 has proposed improving the heat resistance of silicone compositions by adding an iron oxide or the like thereto. Also, in JP 2018-123200 A, the applicant of the present application has proposed carbon powders such as acetylene black, carbon nanotubes, carbon nanofibers, graphene, and furnace black as heat resistance enhancers.

### Disclosure of Invention

The present invention relates to a heat-resistant resin composition containing: a matrix resin made of a thermosetting resin; and a heat-resistant additive, wherein the heat-resistant additive is cellulose charcoal powder.

### Brief Description of Drawings

[FIG. 1] FIG. 1 is a schematic cross-sectional view illustrating how a heat-resistant resin sheet is used in an embodiment of the present invention.
[FIG. 2] FIGs. 2A and 2B are schematic diagrams illustrating a method for measuring the thermal conductivity of a sample in one example of the present invention.
[FIG. 3] FIG. 3 shows an enlarged SEM image (at 1000x magnification) of a bamboo charcoal powder used in one example of the present invention.
[FIG. 4] FIG. 4 is a graph showing changes in ASKER-C hardness of heat-resistant resin sheets of Examples and Comparative Examples of the present invention over time during storage in a thermostatic chamber at 150°C for up to 1000 hours.
[FIG. 5] FIG. 5 is a graph showing changes in viscosity of the heat-resistant resin compositions of Examples and Comparative Examples of the present invention over time.

### Description of the Invention

However, pigments added to conventional resin compositions and resin sheets formed using the conventional resin compositions often contain a metallic or ionic component such as sulfur, copper, or cobalt. When such a metallic or ionic component is contained, curing of thermosetting resins may be inhibited. In addition, there is a problem in that resin sheets containing such a metal or component may adversely affect semiconductors and the like.

To solve the above-described conventional problems, the present invention provides a heat-resistant resin composition that does not inhibit curing of thermosetting resins and does not adversely affect semiconductors and the like, a heat-resistant resin sheet formed using the heat-resistant resin composition, and a method for producing the heat-resistant resin sheet.

The heat-resistant resin composition of the present invention is a heat-resistant resin composition containing: a matrix resin made of a thermosetting resin; and a heat-resistant additive, wherein the heat-resistant additive is cellulose charcoal powder.

The heat-resistant resin sheet of the present invention is a heat-resistant resin sheet including the above-described heat-resistant resin composition and having been formed into a sheet.

The method for producing a heat-resistant resin sheet of the present invention includes the steps of: vacuum defoaming the above-described heat-resistant resin composition; rolling the defoamed heat-resistant resin composition to form the heat-resistant resin composition into a sheet; and then heat-curing the sheet to obtain a heat-resistant resin sheet.

The heat-resistant resin composition of the present invention contains: a matrix resin made of a thermosetting resin; and a heat-resistant additive, wherein the heat-resistant additive is cellulose charcoal powder. By employing the above composition, the present invention can provide a heat-resistant resin composition that does not inhibit curing of thermosetting resins and does not adversely affect semiconductors and the like, as well as a heat-resistant resin sheet formed using the heat-resistant resin composition and a method for producing the heat-resistant resin sheet. Since cellulose charcoal powder is obtained by carbonizing natural cellulose at high temperature and then pulverizing the resulting charcoal, it contains substantially no metallic or ionic components such as sulfur, copper, and cobalt. Therefore, a heat-resistant resin composition containing cellulose charcoal powder is resistant to heat and exhibits little change in hardness even when it is exposed to a temperature of, e.g., 150°C for a long time. Such a heat-resistant resin composition is useful as a thermally conductive composition and as a thermally conductive sheet using the same, in particular, a heat dissipating sheet (thermal interface material: TIM) containing thermally conductive particles. This is because, since heat from a heat-generating electronic component such as a semiconductor is transferred to a heat dissipator, it is important for the heat-dissipating sheet to have high heat resistance.

[Heat-Resistant Resin Composition]

As described above, the heat-resistant resin composition of the present invention contains a matrix resin made of a thermosetting resin and a heat-resistant additive.

<Matrix resin (component A)>

In the present invention, the matrix resin made of a thermosetting resin is, for example, a silicone resin, an acrylic resin, fluorocarbon rubber, an epoxy resin, a phenol resin, an unsaturated polyester resin, a melamine resin, an acrylic resin, a fluorocarbon resin, or a non-reactive silicone oil. Of these, the silicone resin and non-reactive silicone oil are preferable as the matrix resin because they are highly heat-resistant and non-corrosive to the surroundings and release little by-products to the outside of the system. The silicone resin may be in the form of rubber, gel, grease, putty, liquid, or the like.

The silicone resin used as the matrix resin will be described. For example, the silicone resin is preferably an addition-curable silicone resin, a peroxide curable silicone resin, or a condensation silicone resin. One of these resins may be used alone or a mixture of two or more of them may be used. The respective silicone resins will be described.

In one example, the matrix resin preferably contains the following components (A1) and (A2):

(A1) a base polymer: an organopolysiloxane having two or more silicon-bonded alkenyl groups per molecule; and
(A2) a crosslinking component: an organohydrogenpolysiloxane having at least two silicon-bonded hydrogen atoms per molecule.

In addition to the components (A1) and (A2), the addition-curable silicone resin may further contain an organopolysiloxane having no reactive group. The organopolysiloxane having no reactive group is, for example, an unreacted silicone oil, and examples thereof include dimethylpolysiloxane.

The respective components will be described below.

<<Base polymer (component A1)>>

The base polymer is an organopolysiloxane having two or more silicon-bonded alkenyl groups per molecule. The organopolysiloxane is the main agent (base polymer component) of the matrix resin in the present invention. In the organopolysiloxane having two silicon-bonded alkenyl groups per molecule, the alkenyl groups are each an alkenyl group having 2 to 8 carbon atoms, in particular, 2 to 6 carbon atoms, such as a vinyl group or an allyl group. The viscosity of the organopolysiloxane is desirably 10 to 1,000,000 mPa·s and particularly desirably 100 to 100,000 mPa·s at 25°C from the viewpoint of workability, curability, and the like.

Specifically, an organopolysiloxane having alkenyl groups bonded to silicon atoms that are at both ends of the molecular chain per molecule as represented by the following general formula (I) can be used. Such an organopolysiloxane is a linear organopolysiloxane whose side chains are capped with alkyl groups. The viscosity of the organopolysiloxane is desirably 10 to 1,000,000 mPa·s at 25°C from the viewpoint of workability, curability, and the like. This linear organopolysiloxane may have a small amount of branched structures (trifunctional siloxane units) in the molecular chain.

[Chemical Formula 1]

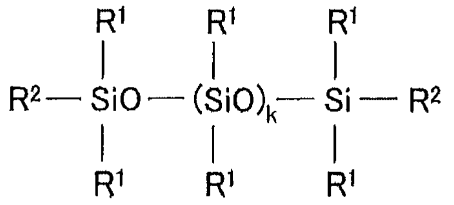

( I )

In the above formula, $R^1$s may be the same or different from each other and each represent an unsubstituted or substituted monovalent hydrocarbon group having no aliphatic unsaturated bond,

$R^2$ represents an alkenyl group, and
k represents 0 or a positive integer.

In the general formula (I), the unsubstituted or substituted monovalent hydrocarbon group having no aliphatic unsaturated bond as $R^1$ is preferably a hydrocarbon group having, for example, 1 to 10 carbon atoms, in particular, 1 to 6 carbon atoms. Specific examples of the unsubstituted monovalent hydrocarbon group having no aliphatic unsaturated bond include: alkyl groups such as methyl, ethyl, propyl, isopropyl, butyl, isobutyl, tert-butyl, pentyl, neopentyl, hexyl, cyclohexyl, octyl, nonyl, and decyl groups; aryl groups such as phenyl, tolyl, xylyl, and naphthyl groups; and aralkyl groups such as benzyl, phenylethyl, and phenylpropyl groups. Specific examples of the substituted monovalent hydrocarbon group having no aliphatic unsaturated bond include: groups obtained by substituting at least one or all of hydrogen atoms in the above-described unsubstituted monovalent hydrocarbon groups by a halogen atom such as fluorine, bromine, or chlorine or by a cyano group, including, for example: halogen-substituted alkyl groups such as chloromethyl, chloropropyl, bromoethyl, and trifluoropropyl groups; and cyanoethyl groups.

In the general formula (I), the alkenyl group as $R^2$ is preferably an alkenyl group having, for example, 2 to 6 carbon atoms, in particular, 2 to 3 carbon atoms. Specific examples of the alkenyl group include vinyl, allyl, propenyl, isopropenyl, butenyl, isobutenyl, hexenyl, and cyclohexenyl groups, and a vinyl group is preferable.

In the general formula (I), k represents 0 or a positive integer, preferably 0 or a positive integer satisfying $0 \leq k \leq 10{,}000$, more preferably an integer satisfying $5 \leq k \leq 2{,}000$, and still more preferably an integer satisfying $10 \leq k \leq 1{,}200$.

As the component A1, the following organopolysiloxane may also be used in combination with the above-described organopolysiloxane: an organopolysiloxane having 3 or more, typically 3 to 30, and preferably about 3 to 20 silicon-bonded alkenyl groups per molecule, in which the alkenyl groups are each an alkenyl group having 2 to 8 carbon atoms, in particular 2 to 6 carbon atoms, such as a vinyl group or an allyl group. The molecular structure of the organopolysiloxane to be used in combination may be a linear, cyclic, branched, or three-dimensional network structure. The organopolysiloxane to be used in combination is preferably a linear organopolysiloxane in which the main chain is composed of repeating diorganosiloxane units and both ends of the molecular chain are capped with triorganosiloxy groups and that has a viscosity of 10 to 1,000,000 mPa·s, in particular 100 to 100,000 mPa·s, at 25°C.

In the organopolysiloxane having two or more silicon-bonded alkenyl groups per molecule, each alkenyl group may be bonded to any part of the molecule. For example, the alkenyl groups may include one bonded to a silicon atom that is at either end of the molecular chain or to a silicon atom that is not at the ends (but in the middle) of the molecular chain. In particular, a linear organopolysiloxane having 1 to 3 alkenyl groups on a silicon atom at each end of the molecular chain as represented by the following general formula (II) and having a viscosity of 10 to 1,000,000 mPa·s at 25°C is desirable from the viewpoint of workability, curability, and the like. However, if the sum of the alkenyl groups bonded to the silicon atoms at both ends of the molecular chain of this linear organopolysiloxane is one or two, the linear organopolysiloxane preferably have an alkenyl group bonded to a silicon atom that is not at the ends (but in the middle) of the molecular chain as a substituent(s) in the diorganosiloxane unit. This linear organopolysiloxane may have a small amount of branched structures (trifunctional siloxane units) in the molecular chain.

[Chemical Formula 2]

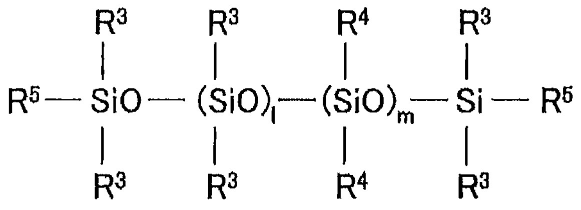

(I I)

In the above formula, $R^3$s may be the same or different from each other and each represent an unsubstituted or substituted monovalent hydrocarbon group, and at least one $R^3$ is an alkenyl group,

$R^4$s may be the same or different from each other and each represent an unsubstituted or substituted monovalent hydrocarbon group having no aliphatic unsaturated bond,

$R^5$ represents an alkenyl group, and
l and m each independently represent 0 or a positive integer.

In the general formula (II), the monovalent hydrocarbon group as $R^3$ is preferably a hydrocarbon group having, for example, 1 to 10 carbon atoms, in particular, 1 to 6 carbon atoms. Specific examples of the unsubstituted monovalent hydrocarbon group include: alkyl groups such as methyl, ethyl, propyl, isopropyl, butyl, isobutyl, tert-butyl, pentyl, neopentyl, hexyl, cyclohexyl, octyl, nonyl, and decyl groups; aryl groups such as phenyl, tolyl, xylyl, and naphthyl groups; aralkyl groups such as benzyl, phenylethyl, and phenylpropyl groups; and alkenyl groups such as vinyl, allyl, propenyl, isopropenyl, butenyl, hexenyl, cyclohexenyl, and octenyl groups. Specific examples of the substituted monovalent hydrocarbon group include: groups obtained by substituting at least one or all of hydrogen atoms in the above-described unsubstituted monovalent hydrocarbon groups by a halogen atom such as fluorine, bromine, or chlorine or by a cyano group, including, for example: halogen-substituted alkyl groups such as chloromethyl, chloropropyl, bromoethyl, and trifluoropropyl groups; and cyanoethyl groups.

In the general formula (II), the unsubstituted or substituted monovalent hydrocarbon group having no aliphatic unsaturated bond as $R^4$ is also preferably a hydrocarbon group having 1 to 10 carbon atoms, in particular, 1 to 6 carbon atoms. Specific examples of the unsubstituted or substituted monovalent hydrocarbon group having no aliphatic unsaturated bond as $R^4$ are the same as those given above for the unsubstituted or substituted monovalent hydrocarbon group having no aliphatic unsaturated bond as $R^1$, excluding the alkenyl groups.

In the general formula (II), the alkenyl group as $R^5$ is preferably an alkenyl group having, for example, 2 to 6 carbon atoms, in particular, 2 to 3 carbon atoms. Specific examples of the alkenyl group are the same as those given above for $R^2$ in the above formula (I), and a vinyl group is preferable.

In the general formula (II), 1 and m each independently represent 0 or a positive integer, preferably 0 or a positive integer satisfying $0 < 1 + m \leq 10,000$, and more preferably an integer that satisfies $5 \leq 1 + m \leq 2,000$, more preferably $10 \leq 1 + m \leq 1,200$, and also preferably satisfies $0 < 1/(1 + m) \leq 0.2$, more preferably $0.0011 \leq l/(l + m) \leq 0.1$.

<<Crosslinking component (component A2)>>

The crosslinking component as the component A2 of the present invention is, for example, an organohydrogenpolysiloxane. This organohydrogenpolysiloxane acts as a crosslinking agent. A cured product is formed through an addition reaction (hydrosilylation) between SiH groups in this organohydrogenpolysiloxane and alkenyl groups in the organopolysiloxane as the component A1. Any organohydrogenpolysiloxane having two or more silicon-bonded hydrogen atoms (i.e., SiH groups) per molecule can be used as the crosslinking component (component A2). The molecular structure of this organohydrogenpolysiloxane may be a linear, cyclic, branched, or three-dimensional network structure. An organohydrogenpolysiloxane in which the number of silicon atoms per molecule (i.e., the degree of polymerization) is 2 to 1,000, in particular, around 2 to 300, can be preferably used as the crosslinking component (component A2).

The organohydrogenpolysiloxane includes SiH groups, as described above. In the organohydrogenpolysiloxane, the positions of the SiH groups are not limited to any particular positions, and the SiH groups may be either at the ends or not at the ends (but in the middle) of the molecular chain. Examples of a silicon-bonded organic group other than the hydrogen atom include the same unsubstituted or substituted monovalent hydrocarbon group having no aliphatic unsaturated bond as those given above as examples of $R^1$ in the above general formula (I).

The organohydrogenpolysiloxane as the component A2 may be an organohydrogenpolysiloxane represented by the following formula (III).

[Chemical Formula 3]

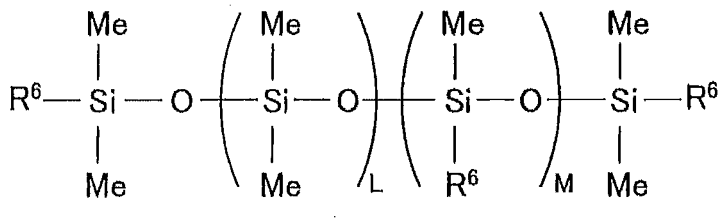

(III)

In the above formula,

$R^6$s may be the same or different from each other and each represent an alkyl group, phenyl group, epoxy group, acryloyl group, methacryloyl group, alkoxy group, or hydrogen atom, and at least two $R^6$s are hydrogen atoms,
L represents an integer of 0 to 1,000 and preferably an integer of 0 to 300, and
M represents an integer of 1 to 200.

Preferably, the crosslinking component is contained in an amount of less than 1 mole with respect to 1 mole of the silicon-bonded alkenyl groups contained in the base polymer component (A1).

The non-reactive silicone oil used as the matrix resin will be described. The kinematic viscosity of the non-reactive silicone oil at 25°C is, for example, 50 to 3,000 $mm^2/s$ and preferably 70 to 2,500 $mm^2/s$. A Brookfield-type rotational viscometer, SP No. 2, is used to measure the viscosity. When the kinematic viscosity is within the above-described range, the degree of oil bleed can be kept low. Besides, when the heat-resistant resin composition further contains thermally conductive particles, the fillability of the thermally conductive particles is also improved. The non-reactive silicone oil is a silicone polymer having no reactive groups, and examples thereof include dimethylpolysiloxane and diphenylpolysiloxane.

<Heat-resistant additive (component D)>

The cellulose charcoal powder used as the heat-resistant additive in the present invention is preferably at least one charcoal powder selected from the group consisting of bamboo charcoal powder, wood charcoal powder, coconut shell charcoal powder, mangrove charcoal powder, plum fruit charcoal powder, plum seed charcoal powder, and rice husk charcoal powder. Of these, bamboo charcoal powder, plum fruit charcoal powder, plum seed charcoal powder, and wood charcoal powder are particularly preferable, because powders with a uniform particle size are readily available for these materials. Such cellulose charcoal powder is produced by carbonizing natural bamboo or wood as a raw material at high temperature. Cellulose charcoal powder can be obtained, for example, by heating the raw material to 1000°C to 1200°C for carbonization, crushing the resulting Bincho-tan (highly carbonized charcoal that produces a metallic sound when struck) taken out of the kiln, and then adjusting the particle size of the crushed charcoal to a predetermined value. Although black pigments such as iron black (triiron tetraoxide) and carbon black and red pigments such as colcothar (ferric oxide) have been used conventionally, these pigments contain metallic or ionic components such as sulfur, copper, and cobalt. Accordingly, they give rise to the above-described problems, including inhibition of curing of thermosetting resins. In contrast, the cellulose charcoal powder used in the present invention contains no such metallic or ionic components and thus does not cause these problems. Furthermore, because the heat-resistant additive of the present invention is cellulose charcoal powder, it also exhibits a function as a black pigment.

The heat-resistant additive may be surface-treated with a coupling agent. The coupling agent may be, for example, a silane coupling agent, specifically, a silane compound represented by the formula $R(CH_3)_aSi(OR')_{4-a}$ (where R represents an unsubstituted or substituted organic group having 1 to 20 carbon atoms, R'represents an alkyl group having 1 to 4 carbon atoms, and a represents 0 or 1) or a partial hydrolysate thereof. Examples of the above-described silane compound include silane compounds such as methyltrimethoxysilane, ethyltrimethoxysilane, propyltrimethoxysilane, butyltrimethoxysilane, pentyltrimethoxysilane, hexyltrimethoxysilane, hexyltriethoxysilane, octyltrimethoxysilane, octyltriethoxysilane, decyltrimethoxysilane, decyltriethoxysilane, dodecyltrimethoxysilane, dodecyltriethoxysilane, hexadecyltrimethoxysilane, hexadecyltriethoxysilane, octadecyltrimethoxysilane, and octadecyltriethoxysilane. One of the above-described silane compounds may be used alone, or two or more of them may be used in combination. The heat-resistant additive may be subjected to surface treatment using the silane coupling agent in an amount of preferably 0.1 to 50 parts by mass and more preferably 0.5 to 30 parts by mass with respect to 100 parts by mass of the heat-resistant additive using a degassing mixer. This is because the silane coupling agent coats the surface of the heat-resistant additive (surface treatment), thereby allowing the heat-resistant additive to be more easily filled into the matrix resin (i.e., functioning as a plasticizer).

The cellulose charcoal powder has a median diameter (D50) of 0.01 to 150 μm, preferably 0.05 to 130 μm, and more preferably 0.1 to 100 μm in a volume-based cumulative particle size distribution. The cellulose charcoal powder with the above-described median diameter is suitable as the heat-resistant additive and black pigment.

The cellulose charcoal powder is contained in the heat-resistant resin composition in an amount of 0.1 to 20 parts by mass, preferably 0.5 to 15 parts by mass, and more preferably 1 to 10 parts by mass with respect to 100 parts by mass of the matrix resin. When the content of the cellulose charcoal powder is in the above-described range, it suitably serves as the heat-resistant additive and black pigment.

<Thermally conductive particles (component C)>

Preferably, the heat-resistant resin composition of the present invention further contains thermally conductive particles. This is because such a heat-resistant resin composition is useful as a thermally conductive composition. The thermally conductive particles are preferably inorganic particles of at least one material selected from the group consisting of aluminum oxide (alumina), zinc oxide, magnesium oxide, aluminum nitride, boron nitride, aluminum hydroxide, and silicon carbide, and the combination of aluminum oxide (alumina) and aluminum hydroxide is more preferable. These inorganic particles have high thermal conductivity, and the heat-resistant resin composition containing them is suitable as a material of a heat dissipating sheet (thermal interface material: TIM). The thermally conductive particles preferably have a median diameter (D50) of 0.01 to 150 μm, more preferably 0.05 to 130 pm, and still more preferably 0.1 to 100 μm in a volume-based cumulative particle size distribution.

As the thermally conductive particles, a plurality of types of thermally conductive inorganic particles with different average particle sizes can be used in combination. The thermally conductive particles with such a composition can be filled in the matrix resin in an almost densest possible state because small-size thermally conductive inorganic particles fill the gaps between large-size thermally conductive inorganic particles, and this allows a cured product of the heat-resistant resin composition to have high thermal conductivity. Also, the above composition can yield a heat-resistant resin composition that turns into a cured product having a low degree of plasticity and good formability. Moreover, a cured product of the heat-resistant resin composition with the above composition can be formed into a heat dissipating sheet (thermal interface material: TIM) that has a low compressive load and is superior to putty-like materials in terms of handleability.

For example, relative to the total amount of the thermally conductive particles taken as 100 mass%, the thermally conductive particles preferably include:

50 to 90 mass% of alumina having a median diameter (D50) of less than 20 pm; and
10 to 50 mass% of aluminum hydroxide having a median diameter (D50) of 20 μm or more, and more preferably include:

60 to 80 mass% of alumina having a median diameter (D50) of less than 20 μm; and
20 to 40 mass% of aluminum hydroxide having a median diameter (D50) of 20 μm or more.

In the heat-resistant resin composition, the thermally conductive particles are contained in an amount of preferably 50 to 3,000 parts by mass, more preferably 100 to 2,000 parts by mass, and still more preferably 200 to 1,800 parts by mass with respect to 100 parts by mass of the matrix resin. When the amount of the thermally conductive particles added to the heat-resistant resin composition is in the above-described range, the heat-resistant resin composition can have high thermal conductivity, and such a heat-resistant resin composition is suitable as a material of a heat dissipating sheet (thermal interface material: TIM) or a thermally conductive sheet.

The thermally conductive particles may be surface-treated with a coupling agent. The coupling agent may be, for example, a silane compound represented by the formula $R(CH_3)_aSi(OR')_{4-a}$ (where R represents an unsubstituted or substituted organic group having 1 to 20 carbon atoms, R' represents an alkyl group having 1 to 4 carbon atoms, and a represents 0 or 1) or a partial hydrolysate thereof. Examples of the above-described silane compound include silane compounds such as methyltrimethoxysilane, ethyltrimethoxysilane, propyltrimethoxysilane, butyltrimethoxysilane, pentyltrimethoxysilane, hexyltrimethoxysilane, hexyltriethoxysilane, octyltrimethoxysilane, octyltriethoxysilane, decyltrimethoxysilane, decyltriethoxysilane, dodecyltrimethoxysilane, dodecyltriethoxysilane, hexadecyltrimethoxysilane, hexadecyltriethoxysilane, octadecyltrimethoxysilane, and octadecyltriethoxysilane. One of the above-described silane compounds may be used alone, or two or more of them may be used in combination. The thermally conductive particles may be surface-treated with the silane coupling agent in an amount of preferably 0.1 to 90 parts by mass and more preferably 0.5 to 85 parts by mass with respect to 100 parts by mass of the thermally conductive particles. This is because the silane coupling agent coats the surface of the thermally conductive particles (surface treatment), thereby allowing the thermally conductive particles to be more easily filled into the matrix resin (i.e., functioning as a plasticizer).

The heat-resistant resin composition may further contain the silane coupling agent in an amount of preferably 0.1

to 10 parts by mass and more preferably 0.5 to 7 parts by mass with respect to 100 parts by mass of the matrix resin. The silane coupling agent coats the surface of the thermally conductive particles and/or the heat-resistant additive (surface treatment), thereby allowing the thermally conductive particles and/or the heat-resistant additive to be more easily filled into the matrix resin (i.e., functioning as a plasticizer).

<Curing catalyst (component B)>

The heat-resistant resin composition of the present invention may further contain a curing catalyst.

The curing catalyst may be a catalyst used for a hydrosilylation reaction. The curing catalyst may be, for example, a platinum group metal catalyst such as: a platinum-based catalyst like platinum black, platinic chloride, chloroplatinic acid, a reaction product of chloroplatinic acid and monohydric alcohol, a complex of chloroplatinic acid with an olefin or vinylsiloxane, or platinum bisacetoacetate; a palladium-based catalyst; or a rhodium-based catalyst. Although a platinum group metal catalyst is normally contained in a two-component type curing silicone polymer, it is preferable to further add an additional platinum group metal catalyst to the heat-resistant resin composition of the present invention. The purpose of adding the platinum group metal catalyst is to control the curing rate of the heat-resistant resin composition.

In the heat-resistant resin composition, the curing catalyst is contained in an amount of, for example, 0.01 to 1,000 parts by mass, preferably 0.1 to 100 parts by mass, and more preferably 0.5 to 50 parts by mass with respect to 100 parts by mass of the matrix resin (component A).

<Other additives>

The heat-resistant resin composition of the present invention may contain components other than the above-described components, when necessary. For example, a heat resistance improver (such as titanium oxide or cerium oxide) and a flame-retardant additive may be added to the heat-resistant resin composition. Moreover, an organic or inorganic pigment may be added to the heat-resistant resin composition for the purpose of coloring and toning. Also, the silane coupling agent as described above may be added to the heat-resistant resin composition.

<Physical properties of heat-resistant resin composition>

The hardness increase rate of the heat-resistant resin composition after 1000 hours at 150°C is preferably 100% or less, more preferably 10% to 80%, and still more preferably 10% to 50% relative to its initial ASKER-C hardness. The lower the hardness increase rate after 1000 hours at 150°C relative to the initial ASKER-C hardness, the higher the heat resistance of the heat-resistant resin composition.

The heat-resistant resin composition of the present invention can be cured by heating or the like.

The ASKER-C hardness (initial) of the heat-resistant resin composition is preferably 75 or less, more preferably 10 to 75, and still more preferably 15 to 70. Such a heat-resistant resin composition can have good followability to a heat generator and a heat dissipator (heat sink).

The dielectric breakdown voltage (JIS K 6249) of the heat-resistant resin composition is preferably 7 to 16 kV/mm. A thermally conductive sheet with high electrical insulation properties can be formed using such a heat-resistant resin composition.

The volume resistivity (JIS K 6249) of the heat-resistant resin composition is preferably $10^{10}$ to $10^{14}$ $\Omega\cdot$cm. A thermally conductive sheet with high electrical insulation properties can be formed using such a heat-resistant resin composition.

[Heat-resistant resin sheet]

The heat-resistant resin composition of the present invention that has been formed into a sheet is very versatile and suitable as a TIM. A heat-resistant resin sheet including the heat-resistant resin composition preferably has a thickness in the range from 0.2 to 10 mm.

The hardness increase rate of the heat-resistant resin sheet after 1000 hours at 150°C is preferably 100% or less, more preferably 10% to 80%, and still more preferably 10% to 50% relative to its initial ASKER-C hardness. The lower the hardness increase rate after 1000 hours at 150°C relative to the initial ASKER-C hardness, the higher the heat resistance of the heat-resistant resin sheet.

The ASKER-C hardness (initial) of the heat-resistant resin sheet is preferably 75 or less, more preferably 10 to 75, and still more preferably 15 to 70. Such a heat-resistant resin sheet can have good followability to a heat generator and a heat dissipator (heat sink).

The thermal conductivity of the heat-resistant resin sheet is preferably 1 W/m·K or more, more preferably 1 to 20 W/m·K, and still more preferably 2 to 20 W/m·K. Such a heat-resistant resin sheet has high thermal conductivity and is

suitable as a heat dissipating sheet (thermal interface material: TIM) or a thermally conductive sheet.

[Method for producing heat-resistant resin sheet]

The method for producing a heat-resistant resin sheet according to the present invention includes the steps of: vacuum defoaming the above-described heat-resistant resin composition; rolling the defoamed heat-resistant resin composition to form the heat-resistant resin composition into a sheet; and then heat-curing the sheet to obtain a heat-resistant resin sheet. The vacuum defoaming can be performed by defoaming the heat-resistant resin composition under a reduced pressure of -0.08 to -0.1 Pa for about 5 to 10 minutes. The rolling may be, for example, rolling using rotating rolls or pressing. Of these, rolling using rotating rolls is preferable because it enables continuous production.

The thus-obtained heat-resistant resin sheet has a substantially uniform composition from the interior to the exterior. A sheet with a uniform composition can exhibit uniform physical properties even after being mounted as a TIM on electrical and electronic components. In the rolling using rotating rolls, for example, the heat-resistant resin composition is sandwiched between two synthetic resin films and rolled with the rolls through the films. The heat-curing conditions for the heat-resistant resin sheet are preferably a temperature of 90°C to 120°C and a time of 5 to 180 minutes. As used herein, the terms "curing" and "crosslinking" are used interchangeably.

The present invention will be described below with reference to the drawings. In the drawings to be described below, the same reference numerals denote the same components. FIG. 1 is a schematic cross-sectional view illustrating a heat dissipation structure 10 in which heat-resistant resin sheets of an embodiment of the present invention are incorporated. A heat-resistant resin sheet 11b dissipates heat generated by an electronic component 13 such as a semiconductor device. The heat-resistant resin sheet 11b is fixed to a main surface 12a of a heat spreader 12 facing the electronic component 13, and placed between the electronic component 13 and the heat spreader 2. A heat-resistant resin sheet 11a is placed between the heat spreader 12 and a heat sink 15. The heat-resistant resin sheets 11a and 11b and the heat spreader 2 constitute a heat dissipation member that serves to dissipate heat from the electronic component 13. The heat spreader 12 is in the form of, for example, a rectangular plate, and has the main surface 12a facing the electronic component 13 and side walls 12b extending vertically from the perimeter of the main surface 12a. In the heat spreader 2, the heat-resistant resin sheet 11b is provided on the main surface 12a surrounded by the side walls 12b. On the other surface 12c of the heat spreader 2, which is on the side opposite to the main surface 12a, the heat sink 15 is provided via the heat-resistant resin sheet 11a. The electronic component 13 is, for example, a semiconductor device such as a BGA and is mounted on a wiring board 14. In this embodiment, the heat-resistant resin sheets function as thermally conductive sheets.

The present invention includes the following embodiments.

[Item 1] A heat-resistant resin composition containing:

a matrix resin made of a thermosetting resin; and
a heat-resistant additive,
wherein the heat-resistant additive is cellulose charcoal powder.

[Item 2] The heat-resistant resin composition according to item 1, wherein the cellulose charcoal powder is at least one charcoal powder selected from the group consisting of bamboo charcoal powder, wood charcoal powder, coconut shell charcoal powder, mangrove charcoal powder, plum fruit charcoal powder, plum seed charcoal powder, and rice husk charcoal powder, and is preferably bamboo charcoal powder, plum fruit charcoal powder, or wood charcoal powder.

[Item 3] The heat-resistant resin composition according to item 1 or 2, wherein the cellulose charcoal powder has a median diameter (D50) of 0.01 to 150 pm, preferably 0.05 to 130 pm, and more preferably 0.1 to 100 μm in a volume-based cumulative particle size distribution.

[Item 4] The heat-resistant resin composition according to any one of items 1 to 3, wherein the cellulose charcoal powder is contained in an amount of 0.1 to 20 parts by mass, preferably 0.5 to 15 parts by mass, and more preferably 1 to 10 parts by mass with respect to 100 parts by mass of the matrix resin.

[Item 5] The heat-resistant resin composition according to any one of items 1 to 4, wherein the matrix resin made of a thermosetting resin is at least one resin selected from the group consisting of a silicone resin, an acrylic resin, fluorocarbon rubber, an epoxy resin, a phenol resin, an unsaturated polyester resin, a melamine resin, an acrylic resin, a fluorocarbon resin, and a non-reactive silicone oil, and is preferably a silicone resin or a non-reactive silicone oil.

[Item 6] The heat-resistant resin composition according to item 5, wherein the silicone resin contains a base polymer (component A1) and a crosslinking component (A2).

[Item 7] The heat-resistant resin composition according to any one of items 1 to 6, wherein the base polymer component is an organopolysiloxane having two or more silicon-bonded alkenyl groups per molecule, preferably an organopolysiloxane having two or more silicon-bonded alkenyl groups per molecule, in which the alkenyl groups are each an alkenyl group having 2 to 8 carbon atoms, in particular, 2 to 6 carbon atoms, such as a vinyl group or an allyl group, and

more preferably an organopolysiloxane having alkenyl groups bonded to silicon atoms at both ends of a molecular chain per molecule as represented by the following general formula (I) or a linear organopolysiloxane having 1 to 3 alkenyl groups on a silicon atom at each end of a molecular chain as represented by the following general formula (II).

[Chemical Formula 4]

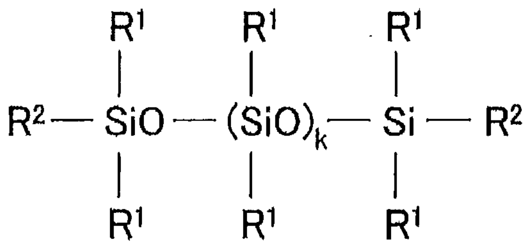

(I)

In the above formula,

$R^1$s may be the same or different from each other and each represent an unsubstituted or substituted monovalent hydrocarbon group having no aliphatic unsaturated bond,
$R^2$ represents an alkenyl group, and
k represents 0 or a positive integer.

[Chemical Formula 5]

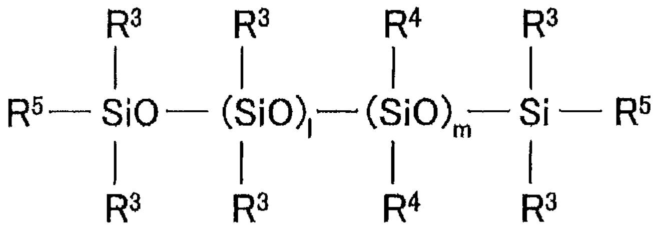

(II)

In the above formula,

$R^3$s may be the same or different from each other and each represent an unsubstituted or substituted monovalent hydrocarbon group, and at least one $R^3$ is an alkenyl group,
$R^4$s may be the same or different from each other and each represent an unsubstituted or substituted monovalent hydrocarbon group having no aliphatic unsaturated bond,
$R^5$ represents an alkenyl group, and
1 and m each independently represent 0 or a positive integer.

[Item 8] The heat-resistant resin composition according to any one of items 1 to 7, wherein the crosslinking component is an organohydrogenpolysiloxane, preferably an organohydrogenpolysiloxane having two or more silicon-bonded hydrogen atoms (i.e., SiH groups) per molecule, and more preferably an organohydrogenpolysiloxane represented by the following general formula (III).

[Chemical Formula 6]

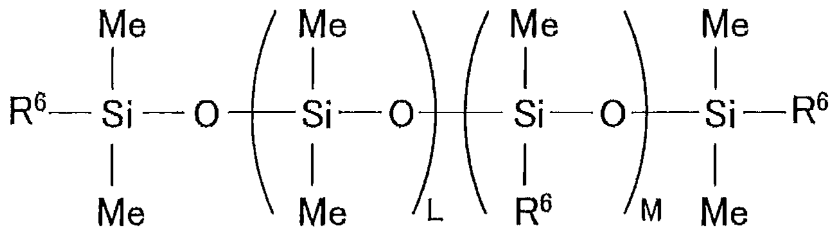

(III)

In the above formula,

$R^6$s may be the same or different from each other and each represent an alkyl group, phenyl group, epoxy group, acryloyl group, methacryloyl group, alkoxy group, or hydrogen atom, and at least two $R^6$s are hydrogen atoms,
L represents an integer of 0 to 1,000 and preferably an integer of 0 to 300, and
M represents an integer of 1 to 200.

[Item 9] The heat-resistant resin composition according to any one of items 1 to 8, wherein the heat-resistant resin composition further contains a curing catalyst, and the curing catalyst is a catalyst used for a hydrosilylation reaction and is preferably a platinum group metal catalyst such as: a platinum-based catalyst like platinum black, platinic chloride, chloroplatinic acid, a reaction product of chloroplatinic acid and monohydric alcohol, a complex of chloroplatinic acid with an olefin or vinylsiloxane, a complex of platinum with vinyldisiloxane, or platinum bisacetoacetate; a palladium-based catalyst; or a rhodium-based catalyst.

[Item 10] The heat-resistant resin composition according to item 9, wherein, in the heat-resistant resin composition, the curing catalyst is contained in an amount of, for example, 0.01 to 1,000 parts by mass, preferably 0.1 to 100 parts by mass, and more preferably 0.5 to 50 parts by mass with respect to 100 parts by mass of the matrix resin (component A).

[Item 11] The heat-resistant resin composition according to any one of items 1 to 10, wherein the heat-resistant resin composition preferably further contains thermally conductive particles, and more preferably, the thermally conductive inorganic particles are inorganic particles of at least one material selected from the group consisting of aluminum oxide (alumina), zinc oxide, magnesium oxide, aluminum nitride, boron nitride, aluminum hydroxide, and silicon carbide.

[Item 12] The heat-resistant resin composition according to item 11, wherein the thermally conductive particles have a median diameter (D50) of 0.01 to 150 pm, preferably 0.05 to 130 μm, and more preferably 0.1 to 100 μm in a volume-based cumulative particle size distribution.

[Item 13] The heat-resistant resin composition according to item 11 or 12, wherein, relative to a total amount of the thermally conductive particles taken as 100 mass%, the thermally conductive particles preferably include:

50 to 90 mass% of alumina having a median diameter (D50) of less than 20 pm; and
10 to 50 mass% of aluminum hydroxide having a median diameter (D50) of 20 μm or more, and more preferably include:

60 to 80 mass% of alumina having a median diameter (D50) of less than 20 μm; and
20 to 40 mass% of aluminum hydroxide having a median diameter (D50) of 20 μm or more.

[Item 14] The heat-resistant resin composition according to any one of items 11 to 13, wherein the thermally conductive particles are contained in an amount of 50 to 3,000 parts by mass, preferably 100 to 2,000 parts by mass, and more preferably 200 to 1,800 parts by mass with respect to 100 parts by mass of the matrix resin.

[Item 15] The heat-resistant resin composition according to any one of items 11 to 14, wherein at least some of the thermally conductive particles are surface-treated with a coupling agent.

[Item 16] The heat-resistant resin composition according to item 15, wherein the coupling agent is a silane coupling agent, preferably a silane compound represented by a formula $R(CH_3)_aSi(OR')_{4-a}$ (where R is an unsubstituted or substituted organic group having 1 to 20 carbon atoms, R' is an alkyl group having 1 to 4 carbon atoms, and a is 0 or 1) or a partial hydrolysate thereof, and more preferably methyltrimethoxysilane, ethyltrimethoxysilane, propyltrimethoxysilane, butyltrimethoxysilane, pentyltrimethoxysilane, hexyltrimethoxysilane, hexyltriethoxysilane, octyltrimethoxysilane, octyltriethoxysilane, decyltrimethoxysilane, decyltriethoxysilane, dodecyltrimethoxysilane, dodecyltriethoxysilane, hexadecyltrimethoxysilane, hexadecyltriethoxysilane, octadecyltrimethoxysilane, or octadecyltriethoxysilane.

[Item 17] The heat-resistant resin composition according to any one of items 11 to 16, wherein the heat-resistant resin composition is a thermally conductive composition.

[Item 18] The heat-resistant resin composition according to any one of items 1 to 16, wherein the heat-resistant additive is surface-treated with a coupling agent.

[Item 19] The heat-resistant resin composition according to item 18, wherein the coupling agent is a silane compound represented by a formula $R(CH_3)_aSi(OR')_{4-a}$ (where R is an unsubstituted or substituted organic group having 1 to 20 carbon atoms, R' is an alkyl group having 1 to 4 carbon atoms, and a is 0 or 1) or a partial hydrolysate thereof, and is preferably methyltrimethoxysilane, ethyltrimethoxysilane, propyltrimethoxysilane, butyltrimethoxysilane, pentyltrimethoxysilane, hexyltrimethoxysilane, hexyltriethoxysilane, octyltrimethoxysilane, octyltriethoxysilane, decyltrimethoxysilane, decyltriethoxysilane, dodecyltrimethoxysilane, dodecyltriethoxysilane, hexadecyltrimethoxysilane, hexadecyltriethoxysilane, octadecyltrimethoxysilane, or octadecyltriethoxysilane.

[Item 20] The heat-resistant resin composition according to any one of items 1 to 19, wherein a hardness increase rate of the heat-resistant resin composition after being maintained at 150°C for 1000 hours is 100% or less, preferably 10% to 80%, and more preferably 10% to 50% relative to its initial ASKER-C hardness.

[Item 21] The heat-resistant resin composition according to any one of items 1 to 20, wherein an ASKER-C hardness (initial) of the heat-resistant resin composition is 75 or less, more preferably 10 to 75, and still more preferably 15 to 70.

[Item 22] A heat-resistant resin sheet including the heat-resistant resin composition according to any one of items 1 to 21 and having been formed into a sheet.

[Item 23] The heat-resistant resin sheet according to item 22, wherein a thermal conductivity of the heat-resistant resin sheet is 1 W/m·K or more, preferably 1 to 20 W/m·K, and more preferably 2 to 20 W/m·K.

[Item 24] The heat-resistant resin sheet according to item 22 or 23, wherein a thickness of the heat-resistant resin sheet is in a range from 0.2 to 10 mm.

[Item 25] A thermally conductive sheet including the heat-resistant resin composition according to any one of items 1 to 21 and having been formed into a sheet.

[Item 26] The thermally conductive sheet according to item 25, wherein a thermal conductivity of the thermally conductive sheet is 1 W/m·K or more, preferably 1 to 20 W/m·K, and more preferably 2 to 20 W/m·K.

[Item 27] The thermally conductive sheet according to item 25 or 26, wherein a thickness of the thermally conductive sheet is in a range from 0.2 to 10 mm.

[Item 28] A method for producing a heat-resistant resin sheet, including the steps of:

vacuum defoaming the heat-resistant resin composition according to any one of items 1 to 21;
rolling the heat-resistant resin composition to form the heat-resistant resin composition into a sheet; and then
heat-curing the sheet.

[Examples]

The present invention will be described below with reference to examples. It is to be noted, however, that the present invention is not limited to the following examples. Various parameters were measured by methods to be described below.

<Thermal conductivity>

The thermal conductivity of a heat-resistant resin sheet was measured using a hot disk (in accordance with ISO 22007-2:2008). As shown in FIG. 2A, this thermal conductivity measuring device 1 sandwiches a polyimide film sensor 2 between two samples 3a and 3b, applies a constant power to the sensor 2 to cause a certain amount of heat generation, and analyzes thermal characteristics based on the value of the temperature rise of the sensor 2. The sensor 2 has a tip 4 with a diameter of 7 mm. As shown in FIG. 2B, the tip 4 has a double spiral electrode structure, and electrodes 5 for applied current and electrodes 6 for resistance value (temperature measurement electrodes) are arranged in a lower portion of the sensor 2. The thermal conductivities were calculated using the following equation (1).

[Mathematical Formula 1]

$$\lambda = \frac{Po \cdot D(\tau)}{\pi^{3/2} \cdot r} \cdot \frac{D(\tau)}{\Delta T(\tau)}$$

λ: Thermal conductivity (W/m·K)
$P_0$: Constant power (W)
r: Radius of sensor (m)
τ: $\sqrt{\alpha \cdot t / r^2}$
α: Thermal diffusivity of sample ($m^2/s$)
t: Measuring time (s)
D(τ): Dimensionless function of τ
ΔT(τ): Temperature rise of sensor (K)

<Initial hardness>

The initial hardness was measured using an ASKER-C hardness meter immediately after preparing a heat-resistant resin composition. The thus-measured hardness is referred to as the initial ASKER-C hardness (A).

<Hardness increase rate>

To measure the hardness after 1000 hours at 150°C, a heat-resistant resin composition was placed in an oven set at 150°C and maintained for 1000 hours. Thereafter, the hardness of the composition was measured using anASKER-C hardness meter. The thus-measured hardness is referred to as the hardness (B) after 1000 hours at 150°C. The hardness increase rate was calculated from data on the initialASKER-C hardness (A) and the hardness (B) after 1000 hours at 150°C as per the following equation.

$$\text{Hardness increase rate} = [(B - A)/A] \times 100$$

A: Initial ASKER-C hardness
B: Hardness after 1000 hours at 150°C

<Viscosity>

To measure the initial viscosity, the viscosity of a heat-resistant resin composition immediately after preparation (the thickness at the time of measurement: 0.5 mm) was measured at 25°C using a viscosity/viscoelasticity measuring device MARS III (HAAKE) at a rotational speed of 1.0 (1/s).
To measure the viscosity after 1000 h (hours) at 150°C, the heat-resistant resin composition was stored in a thermostatic chamber set at 150°C for 1000 hours and then the viscosity of the composition was measured at 25°C using a viscosity/viscoelasticity measuring device MARS III (HAAKE) at a rotational speed of 1.0 (1/s).
The viscosity increase rate after 1000 h at 150°C was calculated from the thus-obtained viscosity values as per the following equation.

$$\text{Viscosity increase rate after 1000 h at 150°C} = [(Y - X)/X] \times 100$$

X: Initial viscosity
Y: Viscosity after 1000 h at 150°C

[Example 1]

1. Materials

(1) Matrix resin (component A): A commercially available two-component type silicone polymer (addition-curable silicone) containing a polyorganosiloxane was used in an amount of 100 g (a total amount of solutions A and B). One of the components (the solution A) contained a base polymer component (polyorganosiloxane, the component A1 as part of the component A) and a platinum group metal catalyst. The other component (the solution B) contained a base polymer component (polyorganosiloxane, the component A1 as part of the component A) and an organohydrogenpolysiloxane as a crosslinking component (the component A2 as part of the component A). The ratio of the solution A to the solution B is A:B = 100:100 in terms of mass ratio. By mixing the solutions together at room temperature, this two-component type silicone polymer turns into a silicone resin through an addition-curing reaction.
(2) Curing catalyst (component B): 0.5 g of a commercially available platinum catalyst was used.
(3) Thermally conductive particles (component C): Thermally conductive particles shown in Table 1 were used. The average particle size is a median diameter (D50) in a volume-based cumulative particle size distribution measured by a laser diffraction/scattering method. 512 g of alumina (C1) with a median diameter (D50) of 4.6 μm and 232 g of aluminum hydroxide (C2) with a median diameter (D50) of 49 μm were used.
A measuring instrument for measuring the median diameter may be, for example, a laser diffraction/scattering particle size distribution analyzer LA-950 S2 manufactured by HORIBA, Ltd.

(C1): alumina (D50 = 4.6 μm, 82 mass% thereof was surface-treated with a silane coupling agent (decyltrimethoxysilane))
(C2): aluminum hydroxide (D50 = 49 pm)

(4) Heat-resistant additive (component D): 7 g of commercially available bamboo charcoal powder (manufactured by Suncall Corporation, trade name "Kyokaguya-sumi", median diameter (D50) = 1.8 pm) was used. FIG. 3 shows an enlarged SEM image (at 1000x magnification) of this bamboo charcoal powder.

2. Heat-resistant resin composition

The respective materials in amounts shown in Table 1 were weighed, and they were mixed in a mixer to obtain a heat-resistant resin composition. The numerical values for the respective materials in Table 1 represent parts by mass (g). The thus-obtained heat-resistant resin composition was defoamed under a reduced pressure of -0.1 Pa for 5 minutes.

3. Sheet forming process

The heat-resistant resin composition was sandwiched between polyethylene terephthalate (PET) films that had been subjected to a release treatment, and then was formed into a sheet having a thickness of 2.0 mm by rolling using even-speed rolls. Subsequently, the composition in the form of sheet was heat-cured at 100°C for 10 minutes to obtain a heat-resistant resin sheet with a thickness of 2.0 mm. This heat-resistant resin sheet had a thermal conductivity of 2.3 W/m·K.

[Example 2]

A heat-resistant resin sheet was obtained in the same manner as in Example 1, except that the amount of bamboo charcoal powder added was set to 3.5 g.

[Example 3]

A heat-resistant resin sheet was obtained in the same manner as in Example 1, except that the amount of bamboo charcoal powder added was set to 1.75 g.

[Example 4]

A heat-resistant resin sheet was obtained in the same manner as in Example 1, except that, instead of the bamboo charcoal powder with a median diameter (D50) of 1.8 μm, bamboo charcoal powder with a median diameter (D50) of 5.0 μm was used.

[Example 5]

A heat-resistant resin sheet was obtained in the same manner as in Example 2, except that, instead of the bamboo charcoal powder with a median diameter (D50) of 1.8 pm, plum seed charcoal powder with a median diameter (D50) of 5.6 μm (manufactured by Furusato Shokko Laboratory, trade name: "Umetane-sumi Funmatsu") was used.

[Comparative Example 1]

A heat-resistant resin sheet was obtained in the same manner as in Example 1, except that the heat-resistant additive (component D) was not added.

[Comparative Example 2]

A heat-resistant resin sheet was obtained in the same manner as in Example 1, except that, instead of the heat-resistant additive (component D), 7 g of a conventional color pigment, namely, iron black (median diameter (D50): 0.17 μm), was used.

The compositions of the respective heat-resistant resin compositions and the results of measuring various parameters of the obtained heat-resistant resin compositions and heat-resistant resin sheets are shown in Tables 1 and 2. Also, a graph showing the results of measuring the ASKER-C hardness when each heat-resistant resin sheet was stored in a thermostatic chamber at 150°C for up to 1000 hours is shown in FIG. 4.

[Table 1]

| Formulation | | | Ex. 1 | Ex. 2 | Ex. 3 | Ex. 4 | Ex. 5 | Comp. Ex. 1 | Comp. Ex. 2 |
|---|---|---|---|---|---|---|---|---|---|
| (A) (B) | Matrix resin | | 100 | 100 | 100 | 100 | 100 | 100 | 100 |
| | Platinum catalyst | | 0.5 | 0.5 | 0.5 | 0.5 | 0.5 | 0.5 | 0.5 |
| (C) | C1: Alumina | | 512 | 512 | 512 | 512 | 512 | 512 | 512 |
| | C2: Aluminum hydroxide | | 232 | 232 | 232 | 232 | 232 | 232 | 232 |
| | | Particle size [μm] | | | | | | | |
| (D) | Bamboo charcoal powder | 1.8 | 7 | 3.5 | 1.75 | - | - | - | - |
| | | 5.0 | - | - | - | 7 | - | - | - |
| | Plum seed charcoal powder | 5.6 | - | - | - | - | 3.5 | - | - |
| | Iron black | 0.2 | - | - | - | - | - | - | 7 |
| Total amount of composition (parts by mass) | | | 851.5 | 848.0 | 846.3 | 851.5 | 848.0 | 844.5 | 851.5 |
| Total amount of component (C) (parts by mass) | | | 744 | 744 | 744 | 744 | 744 | 744 | 744 |
| Component (D) (parts by mass) | | | 7 | 3.5 | 1.75 | 7 | 3.5 | 0 | 7 |
| Initial hardness (ASKER-C) | | | 21 | 20 | 21 | 17 | 25 | 21 | 20 |
| Hardness after 1000 h at 150°C (ASKER-C) | | | 28 | 28 | 30 | 20 | 31 | 64 | 54 |
| Hardness increase rate after 1000 h at 150°C | | | 33% | 40% | 43% | 18% | 24% | 205% | 170% |
| Thermal conductivity (W/m-K) | | | 2.3 | 2.4 | 2.5 | 2.3 | 2.4 | 2.4 | 2.4 |

[Table 2]

| 150°C | Exposure time (h) | 0 | 100 | 250 | 500 | 1000 |
|---|---|---|---|---|---|---|
| ASKER-C hardness | Example 1 | 21 | 23 | 22 | 23 | 28 |
| | Example 2 | 20 | 26 | 23 | 24 | 28 |
| | Example 3 | 21 | 25 | 23 | 27 | 30 |
| | Example 4 | 17 | 15 | 14 | 16 | 20 |
| | Example 5 | 25 | 27 | 26 | 27 | 31 |
| | Comparative Example 1 | 21 | 34 | 47 | 52 | 64 |
| | Comparative Example 2 | 20 | 28 | 31 | 38 | 54 |

(continued)

| 150°C | Exposure time (h) | 0 | 100 | 250 | 500 | 1000 |
|---|---|---|---|---|---|---|
| Increase rate [%] | Example 1 | 0% | 10% | 5% | 10% | 33% |
| | Example 2 | 0% | 30% | 15% | 20% | 40% |
| | Example 3 | 0% | 19% | 10% | 29% | 43% |
| | Example 4 | 0% | -12% | -18% | -6% | 18% |
| | Example 5 | 0% | 8% | 4% | 8% | 24% |
| | Comparative Example 1 | 0% | 62% | 124% | 148% | 205% |
| | Comparative Example 2 | 0% | 40% | 55% | 90% | 170% |

As can be seen from Tables 1 and 2 and FIG. 4, the heat-resistant resin sheets according to Examples 1 to 5 of the present invention all exhibited an ASKER-C hardness increase rate of 50% or less after being stored in a thermostatic chamber at 150°C for 1000 hours. The results confirm that they have much higher heat resistance than the heat-resistant resin sheet of Comparative Example 1, which exhibited an ASKER-C hardness increase rate of 205%, and the heat-resistant resin sheet of Comparative Example 2, which exhibited an ASKER-C hardness increase rate of 170%.

[Example 6]

Commercially available bamboo charcoal powder (manufactured by Suncall Corporation, brand name "Kyokaguya-sumi", median diameter (D50) = 1.8 pm) and a silane coupling agent (decyltrimethoxysilane) were added to a container at a mass ratio of the bamboo charcoal powder to the silane coupling agent of 10:1 and stirred using a planetary degassing mixer, whereby the bamboo charcoal powder was surface-treated. A heat-resistant resin sheet was obtained in the same manner as in Example 1, except that, instead of 7 g of the commercially available bamboo charcoal powder (manufactured by Suncall Corporation, trade name "Kyokaguya-sumi", median diameter (D50) = 1.8 μm), 17 g of this surface-treated bamboo charcoal powder was used. The obtained heat-resistant resin sheet retained its shape. In addition, the heat-resistant resin sheet allowed a PET film to be cleanly peeled off therefrom and still retained its shape. The results confirm that the heat-resistant resin sheet of Example 6 has excellent curability.

[Example 7]

1. Materials

(1) Matrix resin (component A): 100 g of a commercially available dimethyl silicone oil (kinematic viscosity at 25°C: 1,800 $mm^2/s$) was used.
(2) Curing catalyst (component B): No curing catalyst was used.
(3) Thermally conductive particles (component C): Thermally conductive particles shown in Table 3 were used. The average particle size is a median diameter (D50) in a volume-based cumulative particle size distribution measured by a laser diffraction/scattering method. 614.4 g of alumina (C1) with a median diameter (D50) of 4.6 μm and 278.4 g of aluminum hydroxide (C2) with a median diameter (D50) of 49 μm were used.
A measuring instrument for measuring the median diameter may be, for example, a laser diffraction/scattering particle size distribution analyzer LA-950 S2 manufactured by HORIBA, Ltd.

(C1): alumina (D50 = 4.6 pm, 82 mass% thereof was surface-treated with a silane coupling agent (decyltrimethoxysilane))
(C2): aluminum hydroxide (D50 = 49 μm)

(4) Heat-resistant additive (component D): 3.5 g of commercially available bamboo charcoal powder (manufactured by Suncall Corporation, trade name: "Kyokaguya-sumi", median diameter (D50) = 1.8 pm) was used.

2. Heat-resistant resin composition

The respective materials in amounts shown in Table 3 were weighed, and they were mixed in a mixer to obtain a

heat-resistant resin composition. The numerical values for the respective materials in Table 3 represent parts by mass (g). The thus-obtained heat-resistant resin composition was defoamed under a reduced pressure of -0.1 Pa for 5 minutes.

[Comparative Example 3]

A heat-resistant resin composition was obtained in the same manner as in Example 7, except that the heat-resistant additive (component D) was not used.

[Comparative Example 4]

A heat-resistant resin composition was obtained in the same manner as in Example 7, except that, instead of the heat-resistant additive (component D), 3.5 g of a conventional color pigment, namely, iron black (median diameter (D50): 0.2 μm), was used.

The compositions of the respective heat-resistant resin compositions and the results of measuring various parameters of the obtained heat-resistant resin compositions are shown in Tables 3 and 4. Also, a graph showing changes in viscosity of the heat-resistant resin compositions over time is shown in FIG. 5.

[Table 3]

| Formulation | | | Ex. 7 | Comp. Ex. 3 | Comp. Ex. 4 |
|---|---|---|---|---|---|
| (A) | Matrix resin | | 100 | 100 | 100 |
| (C) | C1: Alumina | | 614.4 | 614.4 | 614.4 |
| | C2: Aluminum hydroxide | | 278.4 | 278.4 | 278.4 |
| | | Particle size [μm] | | | |
| (D) | Bamboo charcoal powder | 1.8 | 3.5 | - | - |
| | Iron black | 0.2 | - | - | 3.5 |
| Total amount of composition (parts by mass) | | | 996.3 | 992.8 | 996.3 |
| Total amount of component (C) (parts by mass) | | | 892.8 | 892.8 | 892.8 |
| Component (D) (parts by mass) | | | 3.5 | - | 3.5 |
| Initial viscosity [1/s] | | | 1628 | 1513 | 1438 |
| Viscosity after 1000 h at 150°C [1/s] | | | 1874 | 2309 | 2617 |
| Viscosity increase rate after 1000 h at 150°C | | | 15% | 53% | 82% |

[Table 4]

| 150°C | Exposure time (h) | 0 | 100 | 250 | 500 | 1000 |
|---|---|---|---|---|---|---|
| Viscosity [1/s] | Example 7 | 1628 | 1531 | 1631 | 1721 | 1874 |
| | Comparative Example 3 | 1513 | 2218 | 2423 | 2278 | 2309 |
| | Comparative Example 4 | 1438 | 2186 | 2423 | 2366 | 2617 |
| Viscosity increase rate [%] | Example 7 | 0% | -6% | 0% | 6% | 15% |
| | Comparative Example 3 | 0% | 47% | 60% | 51% | 53% |
| | Comparative Example 4 | 0% | 52% | 68% | 65% | 82% |

The results shown in Tables 3 and 4 and FIG. 5 confirmed that, even in an uncured state, the heat-resistant resin composition of Example 7 containing the heat-resistant additive (D) can suppress the viscosity increase rate after being stored at 150°C for 1000 hours. That is, it was confirmed that the heat-resistant resin composition of the present invention can suppress the viscosity increase rate even after storage at high temperatures and thus is excellent in heat resistance.

The heat-resistant resin composition and heat-resistant resin sheet of the present invention are suitable as a heat dissipating sheet (thermal interface material: TIM) to be interposed between a heat generating member and a heat dissipator in electrical and electronic components and the like or as a thermally conductive sheet.

[Description of Reference Numerals]

| | |
|---|---|
| 1 | Thermal conductivity measuring device |
| 2 | Sensor |
| 3a, 3b | Sample |
| 4 | Tip of sensor |
| 5 | Electrode for applied current |
| 6 | Electrode for resistance value (temperature measurement electrode) |
| 10 | Heat dissipation structure |
| 11a, 11b | Heat-resistant resin sheet |
| 12 | Heat spreader |
| 13 | Electronic component |
| 14 | Wiring board |
| 15 | Heat sink |

**Claims**

**1.** A heat-resistant resin composition comprising:

a matrix resin made of a thermosetting resin; and
a heat-resistant additive,
wherein the heat-resistant additive is cellulose charcoal powder.

**2.** The heat-resistant resin composition according to claim 1, wherein the cellulose charcoal powder is at least one charcoal powder selected from the group consisting of bamboo charcoal powder, wood charcoal powder, coconut shell charcoal powder, mangrove charcoal powder, plum fruit charcoal powder, plum seed charcoal powder, and rice husk charcoal powder.

**3.** The heat-resistant resin composition according to claim 1 or 2, wherein the cellulose charcoal powder has a median diameter (D50) of 0.01 to 150 $\mu$m in a volume-based cumulative particle size distribution.

**4.** The heat-resistant resin composition according to any one of claims 1 to 3, wherein the cellulose charcoal powder is contained in an amount of 0.1 to 20 parts by mass with respect to 100 parts by mass of the matrix resin.

**5.** The heat-resistant resin composition according to any one of claims 1 to 4, wherein the matrix resin made of a thermosetting resin is at least one resin selected from the group consisting of a silicone resin, an acrylic resin, fluorocarbon rubber, an epoxy resin, a phenol resin, an unsaturated polyester resin, a melamine resin, an acrylic resin, a fluorocarbon resin, and a non-reactive silicone oil.

**6.** The heat-resistant resin composition according to any one of claims 1 to 5, wherein the heat-resistant resin composition further contains thermally conductive particles, and the thermally conductive inorganic particles are inorganic particles of at least one material selected from the group consisting of aluminum oxide (alumina), zinc oxide, magnesium oxide, aluminum nitride, boron nitride, aluminum hydroxide, and silicon carbide.

**7.** The heat-resistant resin composition according to any one of claims 1 to 6, wherein the thermally conductive particles are contained in an amount of 50 to 3,000 parts by mass with respect to 100 parts by mass of the matrix resin.

**8.** The heat-resistant resin composition according to claim 6 or 7, wherein at least some of the thermally conductive particles are surface-treated with a coupling agent.

**9.** The heat-resistant resin composition according to any one of claims 1 to 8, wherein a hardness increase rate of the heat-resistant resin composition after being maintained at 150°C for 1000 hours is 100% or less relative to its initial ASKER-C hardness.

**10.** A heat-resistant resin sheet comprising the heat-resistant resin composition according to any one of claims 1 to 9 and having been formed into a sheet.

11. The heat-resistant resin sheet according to claim 10, wherein the heat-resistant resin sheet has a thickness in a range from 0.2 to 10 mm.

12. A method for producing a heat-resistant resin sheet, comprising the steps of:

    vacuum defoaming the heat-resistant resin composition according to any one of claims 1 to 9;
    rolling the defoamed heat-resistant resin composition to form the heat-resistant resin composition into a sheet; and then
    heat-curing the sheet to obtain a heat-resistant resin sheet.

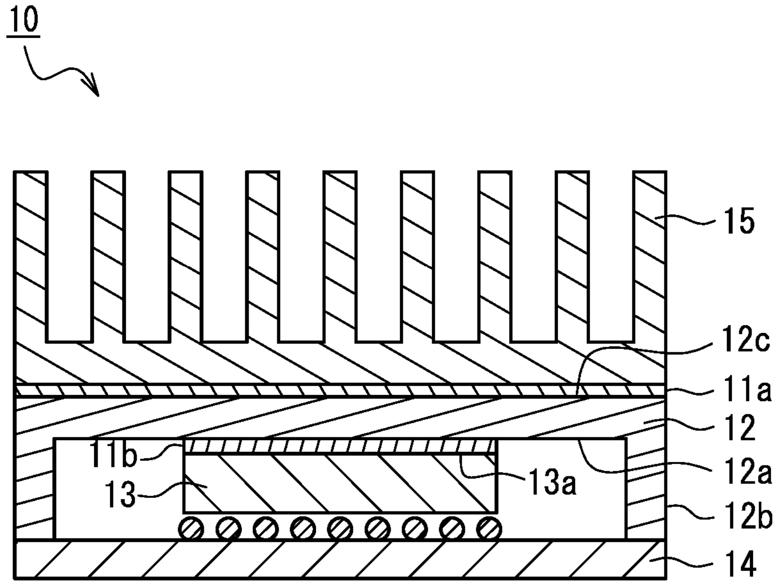


FIG. 1

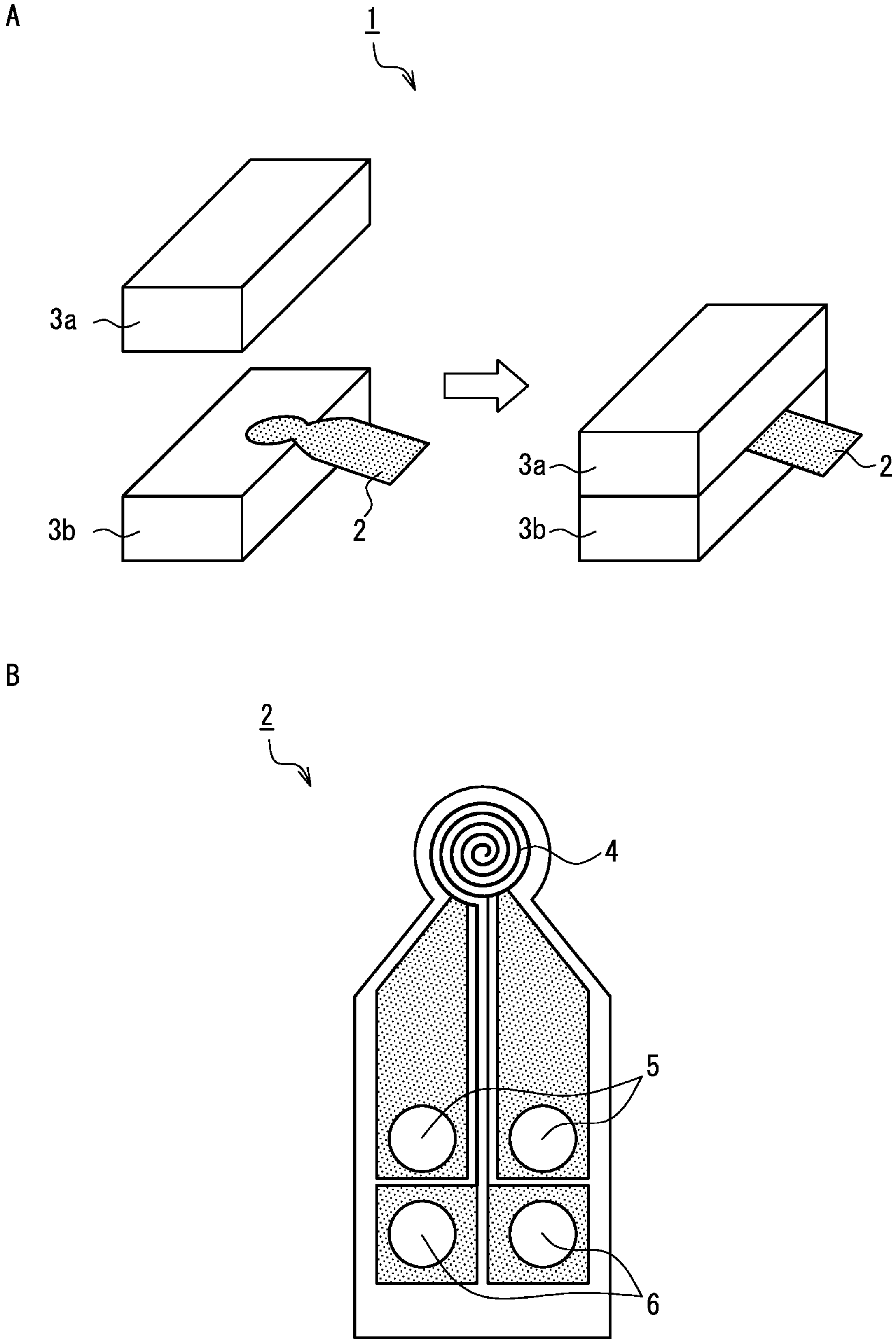


FIG. 2

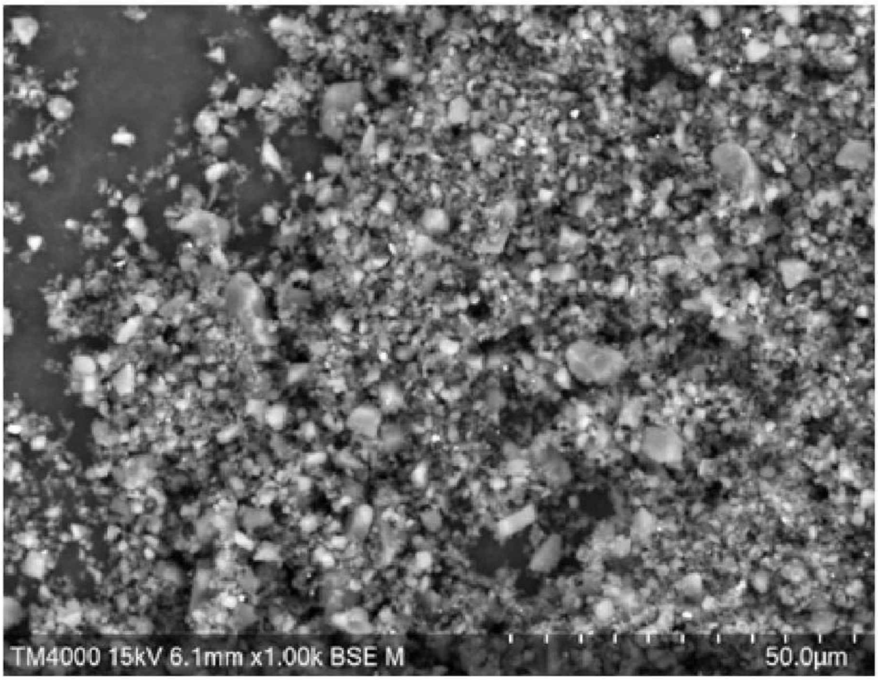


FIG. 3

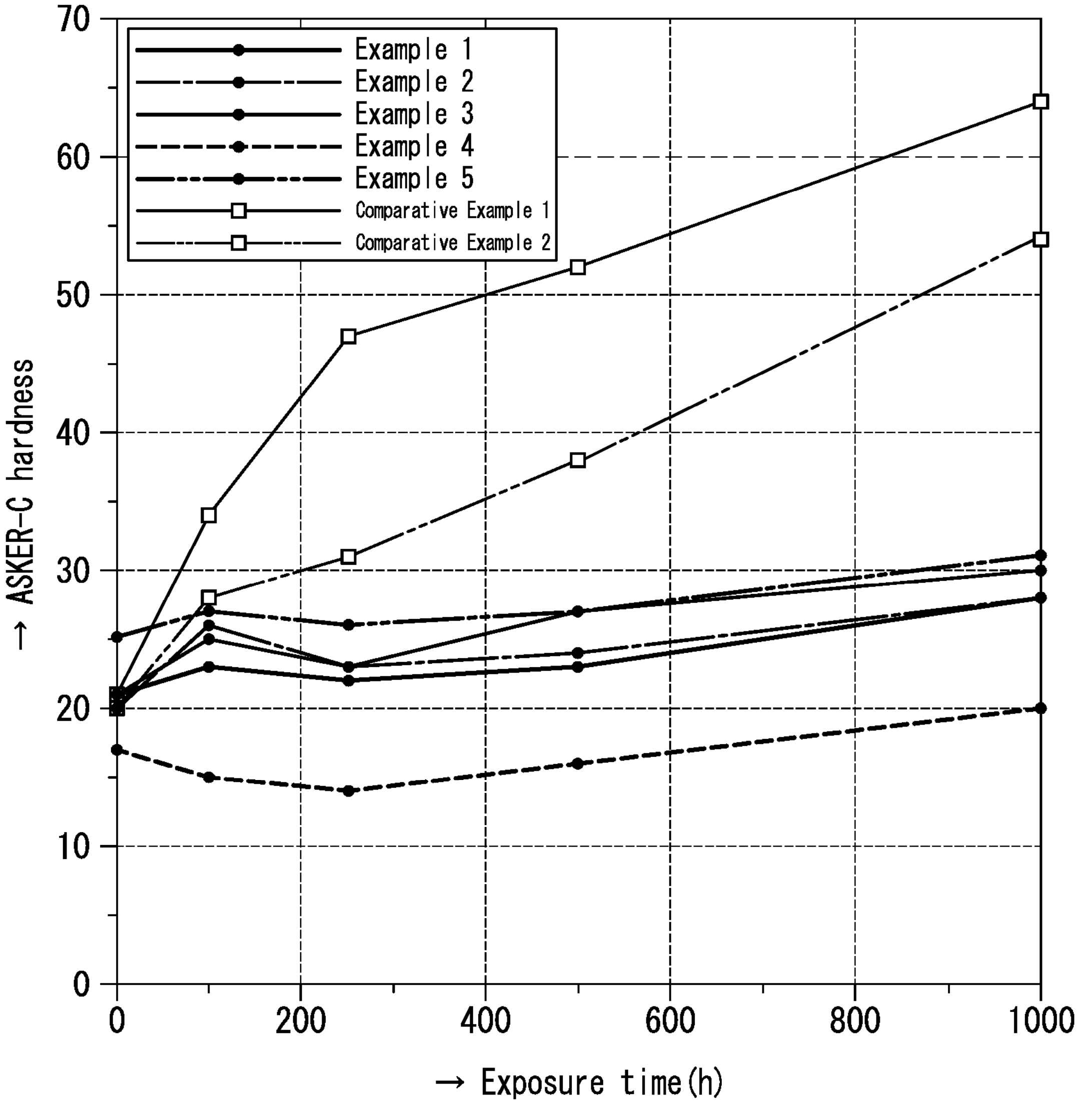
70
60
50
40
30
20
10
0
0
200
400
600
800
1000
→ ASKER-C hardness
→ Exposure time(h)
Example 1
Example 2
Example 3
Example 4
Example 5
Comparative Example 1
Comparative Example 2

FIG. 4

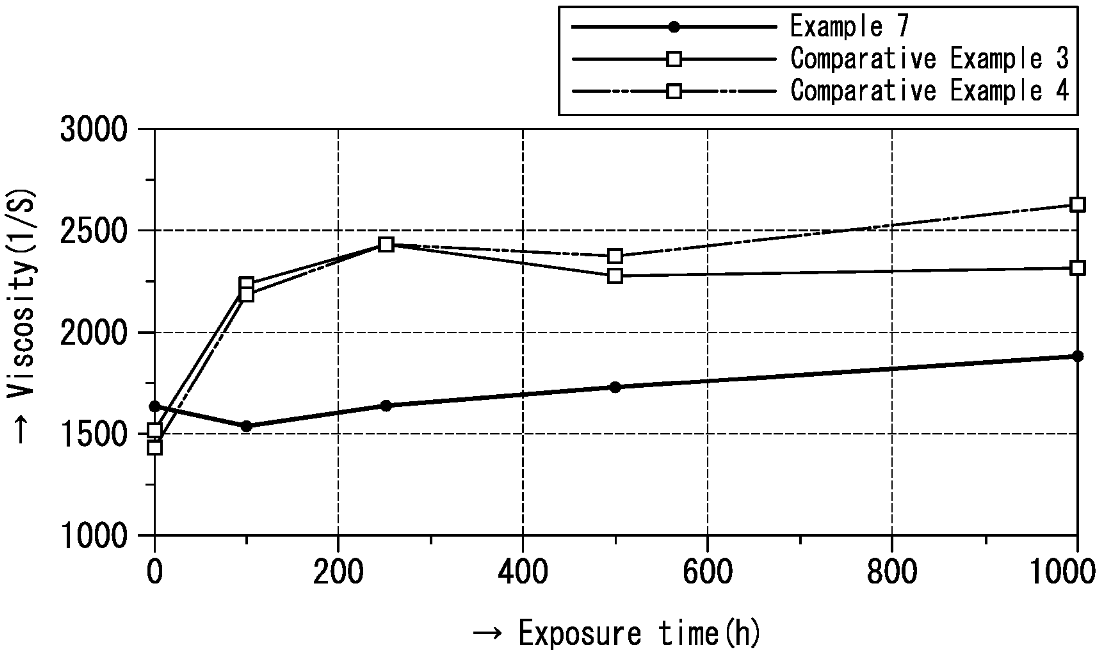
Example 7
Comparative Example 3
Comparative Example 4
3000
2500
2000
1500
1000
↑ Viscosity(1/S)
0
200
400
600
800
1000
→ Exposure time(h)

FIG. 5

## INTERNATIONAL SEARCH REPORT

International application No.
**PCT/JP2024/034760**

**A. CLASSIFICATION OF SUBJECT MATTER**

***C08L 101/00***(2006.01)i; ***C08K 3/01***(2018.01)i; ***C08K 3/04***(2006.01)i
FI: C08L101/00; C08K3/01; C08K3/04

According to International Patent Classification (IPC) or to both national classification and IPC

**B. FIELDS SEARCHED**

Minimum documentation searched (classification system followed by classification symbols)

C08L101/00; C08K3/01; C08K3/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 113563082 A (CHINA BUILDING MATERIALS ACADEMY) 29 October 2021 (2021-10-29)<br>claims, examples | 1-3, 5-7, 9 |
| A | | 8, 10-12 |
| X | CN 104672781 A (HEFU NEW MATERIAL TECHNOLOGY (WUXI) CO., LTD.) 03 June 2015 (2015-06-03)<br>claims, examples | 1-5, 9-12 |
| A | | 6-8 |
| X | JP 2013-86047 A (DOSHISHA) 13 May 2013 (2013-05-13)<br>claims, paragraphs [0023]-[0025], examples | 1-5, 9-12 |
| A | | 6-8 |
| A | JP 2018-123200 A (FUJI POLYMER IND) 09 August 2018 (2018-08-09)<br>entire text | 1-12 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/034760**

| Patent document cited in search report | Publication date (day/month/year) | Patent family member(s) | Publication date (day/month/year) |
|---|---|---|---|
| CN 113563082 A | 29 October 2021 | (Family: none) | |
| CN 104672781 A | 03 June 2015 | (Family: none) | |
| JP 2013-86047 A | 13 May 2013 | WO 2013/058310 A1<br>CN 204247044 U | |
| JP 2018-123200 A | 09 August 2018 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019021826 A
- JP 2018123200 A